(19) Europäisches Patentamt
European Patent Office
Office européen des brevets

(11) **EP 4 510 046 A1**

(12) **EUROPEAN PATENT APPLICATION**

(43) Date of publication:
**19.02.2025 Bulletin 2025/08**

(21) Application number: **23191528.1**

(22) Date of filing: **15.08.2023**

(51) International Patent Classification (IPC):
**G06N 3/094** (2023.01)          **G06N 3/09** (2023.01)
**G06N 3/045** (2023.01)

(52) Cooperative Patent Classification (CPC):
**G06N 3/094; G06N 3/045; G06N 3/09;**
G06N 3/0464; G06V 20/582

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **VOLKSWAGEN AG**
**38440 Wolfsburg (DE)**

(72) Inventors:
• **Bayzidi, Yasin**
**38102 Braunschweig (DE)**
• **Schneider, Jan David**
**38446 Wolfsburg (DE)**

(54) **A METHOD AND A VEHICLE WITH A SYSTEM INSTALLED FOR OPTIMIZING A DEEP NEURAL NETWORK (DNN)**

(57)    The invention relates to a method to improve the ability to detect out-of-distribution data with a deep neuronal network (DNN) (10) with a loss function which groups similar classes in order to force the DNN to disentangle them from each other.

Fig. 2

**Description**

A method and a vehicle with a system installed for optimizing a deep neural network (DNN)

The invention relates to a method to detect out-of-distribution (OOD) data of a deep neuronal network.

Furthermore, the invention relates to a vehicle.

The great advances in deep neural networks (DNNs) in the recent years made vision based detection a primary tool for perception sub-systems within highly automated driving systems. Examples of such tasks include semantic segmentation, 2D/3D object detection and image classification. In particular for image classification, the network are trained based on annotated training data. The evaluation of such networks is done on both annotated data (e.g. average precision) and non-annotated data (e.g. temporal consistency), depending on the evaluation method requirements. However, as the final prediction of the DNN is based on highest class score among all the classes a DNN can classify, given no human annotated labels, it is hard to predict if the highest class score is representing the true class.

The methods according the state of the art calculate uncertainty as a reliability metric for the current prediction of the DNN. Although it can be also used to find the anomalous data points, or those that are out of the DNNs operational design domain, such methods measure the uncertainty of the last fully connected layers which can become not reliable when there is anomalous data encoded by the CNN layers of such DNNs.

In Gal, Y. and Ghahramani, Z., "Dropout as a Bayesian Approximation: Representing Model Uncertainty in Deep Learning", International Conference on Machine Learning, PMLR 48:1050-1059, 2016, a single data point is inferred into the network multiple times while removing parts of the network activations using MC drop out to feature an "ensemble of networks" predictions that can be aggregated to model the uncertainty. However, as the each single data point needs to be inferred multiple times -the more, the better- it performs inefficiently when it comes to real-time efficiency required by deployment DNNs.

In Ovadia, Y. et. al., "Can You Trust Your Model's Uncertainty? Evaluating Predictive Uncertainty Under Dataset Shift", 33rd Conference on Neural Information Processing Systems (NeurIPS), 2019, multiple uncertainty estimation methods are compared. It has been shown that, the ensemble methods outperform the others when tested on OOD data, which also indicates that implementing such methods in real time is challenging due to high computational power required by such methods.

In Qio, X. et. al., "Quantifying Point-prediction Uncertainty In Neural Networks Via Residual Estimation With An I/o Kernel", ArXiv, 2020, a Gaussian Processes (GP) model is trained using the inputs and outputs of the main NN, which can then estimate uncertainty of the undertaken NN. However, extending this method to a vision based complex task such as image classification is challenging and leads to high computational cost due to the need for a second model-GP-for estimating the uncertainty. Furthermore, as the GP model cannot directly process the image data, it needs to be equipped with a feature extractor such as CNN, which can also introduce unknown uncertainty to the process.

In Aamir Mustafa, Salman H. Khan, Munawar Hayat, Roland Goecke, Jianbing Shen, and Ling Shao. Deeply supervised discriminative learning for adversarial defense. IEEE Transactions on Pattern Analysis and Machine Intelligence, 43(9):3154-3166, 2021, a prototype conformity loss function is introduced to separate the activations of internal neuron from each other for different classes. In detail, the following notations are given:

Let $x \in R^n$ and y denote an input-label pair and $1_y$ be the one-hot encoding of y. A DNN is denoted as a function $F_\Theta$ (x), where $\Theta$ are the trainable parameters. The DNN outputs a feature representation $f \in R^d$, which is then used by a classification layer to perform multi-class classification. Let k be the number of classes; the parameters of the classifier can then be represented as $W = [w_1,..., w_k] \in R^{d \times k}$. To train the model, the optimal $\Theta$ and W that minimize a given objective function will be found. Therefore, an example of a cross entropy loss function for deep CNNs is introduced as

$$\mathcal{L}_{CE}(\boldsymbol{x}, \boldsymbol{y}) = \sum_{i=1}^{r} -\log \frac{\exp(\boldsymbol{w}_{y_i}^T \boldsymbol{f}_i + \boldsymbol{b}_{y_i})}{\sum_{j=1}^{k} \exp(\boldsymbol{w}_j^T \boldsymbol{f}_i + \boldsymbol{b}_j)},$$

where r is the number of images, and $f_i$ is the feature of an $i^{th}$ image $x_i$ with the class $y_i$. W and b are the weights and the bias terms for the classification layer.

In order to separate activations in latent space for all the classes, Aamir Mustafa et. al. suggest to define an extra optimization goal alongside to the normal loss function. For each class of the dataset a p-norm ball is defined with random centers. Afterwards, the goal would be to project each activation of each data sample to its dedicated class in the first place and to push away from the other classes in the second place. Therefore, each class is represented with its prototype vector, which represents the training examples of that class. Each class is assigned a fixed and non-overlapping p-norm ball w and the training samples belonging to a class i are encouraged to be mapped close to its hyper-ball center:

$$\mathcal{L}_{\mathrm{PC}}(x, y) = \sum_{i} \left\{ \| f_i - w_{y_i}^c \|_2^2 - \frac{1}{k-1} \sum_{j \neq y_i} \left( \| f_i - w_j^c \|_2^2 + \| w_{y_i}^c - w_j^c \|_2^2 \right) \right\},$$

with the contrastive proximity cp (i, j)

$$\mathrm{cp}(i,j) = \| f_i - w_j^c \|_2^2 + \| w_{y_i}^c - w_j^c \|_2^2$$

and the proximity p

$$\mathrm{p}(x_i, y_i) = \| f_i - w_{y_i}^c \|_2^2$$

The final or overall loss function L(x,y) used for training the model is a combination of $L_{CE}$ and the conformity loss $L_{PC}$:

$$\mathcal{L}(x, y) = \mathcal{L}_{\mathrm{CE}}(x, y) + \mathcal{L}_{\mathrm{PC}}(x, y).$$

This in combination with methods such as adversarial training would eventually lead to a more robust DNN. However, such a method is not tested and used for detecting OOD data, such as the same adversarial examples, to reject the DNNs decisions when facing such data.

The method according US 20220391742 A1 suggests to utilize active learning methods to enhance the DNN prediction performance by adding the new unseen data samples to the training dataset. However, US 20220391742 A1 suggests to use epistemic uncertainty to find the OOD data (i.e. new data points), which is often not a reliable method for doing so.

In a comparable manner, the method according US 20200226430 A1 also suggests epistemic uncertainty as a basis to detect OOD data which is unreliable. Furthermore, the method utilizes continuous and unsupervised learning approaches to optimize the DNNs.

The method according US 20220348211 A1 computes the distance of the detected traffic sign with a pre-stored HD map to assess the discrepancy of the captured data and then flag it if it does not match the information of the static objects in the HD map.

US 20220111874 A1 proposes a method which employs the feature vectors generated from the input data to assess the novelty of the unseen data samples. If the distance of the unseen data sample from the seen ones is beyond a threshold then it is rejected and prohibited from being inferred to the classification head.

US 20220343171 A1 introduces an uncertainty calibration method which solely improves the quality of the regression to be used as a basis for OOD detection.

In summary, no detailed method introduced to investigate the latent space representations as a basis for anomalous data detection. Furthermore, although there are various out of distribution (OOD) methods stablished in the literature to find OOD data based on internal neuron activations, there is not any optimization technique to improve the capability of the DNNs for finding such OOD data.

Hence, it is the object of the present invention to introduce a optimization technique to improve the capability of DNNs in finding OOD data. Based on that, it is the object of the invention to suggest a vehicle with a system installed for optimizing the DNN to check if the current prediction made by the DNN is reliable or not.

This object is achieved by the method according claim 1 and the vehicle according claim 14.

The method improves the ability to detect out-of-distribution data with a DNN with a loss function which groups similar classes in order to force the DNN to disentangle them from each other. Especially, the loss function includes the term

$$WL_{PC}(x, y) = \sum_{i} \left\{ p - \frac{1}{k-1} \sum_{j \neq y_i} \begin{cases} \lambda * cp & j \in S^i \\ cp & j \notin S^i \end{cases} \right\},$$

wherein λ>1 and $S^i$ is the set of all similar classes,
or the term

$$L_{MSPC}(\boldsymbol{x}, \boldsymbol{y}) =$$

$$\sum_i \left\{ p^c + p^g - \frac{1}{k-1} \sum_{j \neq y_i} \left( cp^c(i,j) - cp^g(i,j) \right) \right\},$$

wherein g represents groups and $p_g$ represents group levels.

Especially, the loss function is either a first loss function $L_1(x,y) = L_{CE}(x,y) + WL_{PC}(x,y)$.

The factor λ is a factor bigger than 1 to conduct a weighing function and to force the DNN to push the similar classes away from each other. The factor λ can be found through grid search and hyper-parameter tuning approaches. That means, the factor λ needs to be defined through hyper-parameter tuning methods, which includes trying different λs to find the best one. $S^i$ is groups defined by human experts based on the classes structural similarities. For examples all the triangular traffic signs can be defined as one group. Another method for defining the groups are to train the DNN using CE loss and visualizing the activations to check if certain groups are very close to each other. $y_i$ is the class label associated with $x_i$. $p(x_i, y_i)$ is the distance of the feature activations extracted for $x_i$ to the p-norm ball center as depicted as w. In this sense, a p-norm ball is a prototype hyperball initiated with random weights for each class to assign each data point to their respective p-norm ball in the first place and disentangle p-norm balls of different classes so that they would have no overlap after the training in the second place.

Further, the loss function can be a second loss function $L_2(x,y) = L_{CE}(x,y) + L_{MSPC}(x,y)$, wherein, as explained above g represents groups, in particular groups of similar classes, and $p^g$ represents group levels, for example group levels between the group 'speed limits signs' and 'triangle signs'. Furthermore, inside each group, also the $p^c$ in class level is calculated. For example, inside the group speed limits signs the $p^c$ is calculated among 30 km/h, 50 km/h, etc.

Instead of the cross entropy loss function, each other loss function can be added to the above terms $WL_{PC}(x,y)$ or $L_{MSPC}(x,y)$.

In $L_{MSPC}(x,y)$ there are two ps and two cps. That means, for each class that belongs to a group, two ps and two cps are calculated.

The method can be used in the context of environmental perception like traffic sign perception or perception of pedestrians or other vehicles. It can be especially used for detection systems in highly and partially automated driving systems that involve image processing and image classification to detect out of distribution data samples. More general, the method can be used in any image classification system that might encounter out of distribution data samples that are not represented in the training sets during their run-time.

Example: The traffic signs for 30 km/h belongs to the group of 'speed limit signs'. For this class, the $p^g$ is calculated for the group "speed limit signs" against the other groups. This means, the activation generated for the traffic signs for 30 km/h are pushed into the group 'speed limit signs' and away from the other groups like "triangle signs". So the p-norm ball of the group 'speed limit signs' is shared with 30 km/h, 50 km/h, etc. Then the $p^c$ is calculated which is only for 30 km/h and the activation is pushed into this p-norm ball and away from all the other speed limit signs. The group level p-norm ball is a very big one, in which it has smaller p-norm balls inside.

In other words, two variants of PCL are introduced named as weighted PCL (WPCL) and multi-scale PCL (MSPCL) to tackle the problem of having extremely similar classes in the dataset, such as different speed limit signs. This leads to better separation of such classes. Furthermore, the method can be also used for safety argumentation of perception DNNs, where for the DNNs are evaluated on variety of input data points with distances from their true class cluster centers and evidences can be generated based upon.

At any stage of perception and decision making that involves DNNs making predictions, the reliability of such predictions are crucial for the overall automated driving system to be clarified, as the upcoming decisions made by the system can be influenced by such reliability scores. In other words, if a prediction made by a sub-system, such as the perception, found to be unreliable, the system has to follow alternate decisions instead of considering such predictions, as otherwise the safety of the passengers or other traffic participants can be endangered. However, the conventional training methods such as cross entropy loss could lead to having activation clusters of different classes to either be very close to each other, or even be very mixed and have overlaps. In both of such cases, this would lead to poor OOD detection, in particular when the OOD data samples are projected into spaces between such classes, where the differentiation between a clean, inlier example and an OOD data sample would be extremely hard.

The methods according the state of the art are so far based on computationally intensive methods, which are not always easily applicable to the limited resources present in the deployment devices, such as vehicles. On the other hand, their predictions are prone to be misleading when it comes to adversarial perturbations, where they still return highly confident scores for the wrongly predicted data points. The method according the present invention is based on light weight statistical models, which requires a fraction of the computation power that the main DNN requires, thus not affecting the efficiency of the whole detection system. Furthermore, as it is based on statistical analysis methods, decision boundaries can be defined by the system engineers to rely only on a specific range of valid detection and consider the rest as unreliable. This in particular helps for defining reliable and safe decision ranges that the DNN can perform well within them. With the method, one can improve the performance of such statistical methods while the detection accuracy of the main DNN is not compromised.

Based on that, the invention refers to a vehicle with a system installed in the vehicle that uses a reference clustering model built in the backend based on the training dataset used for optimizing the DNN to check if the current prediction made by the DNN is reliable or not. In this sense, the reference clustering models are clustering or outlier detection models that are trained on the training dataset. This means, that the activations of a particular internal layer of the DNN for the whole training set is extracted. Then these activations, which are from the training dataset, which are clean samples, are used to train (or fit) a clustering model. During runtime, the activation of the same internal layer are used for the new data samples and also feed to the clustering model. If the clustering model calculates that this new data is outlier, then the DNN rejects its own decision. Apart from vehicles, the invention can be applied to all technical areas and applications in which the problem occurs of having to differentiate similar classes.

Specific embodiments of the invention are explained below with reference to the figures. The figures show:

Fig. 1 an overview of a common Deep Neural Network (DNN),
Fig. 2 a flowchart of the method and
Fig. 3 a vehicle.

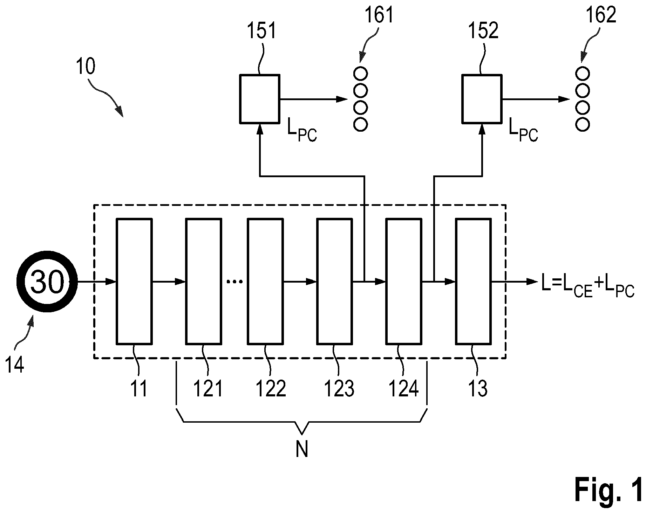

Fig. 1 shows an overview of a common DNN 10 with an input layer 11, N-hidden layers 121, 122, 123, 124 with a pooling layer 123 and a final flattening layer 124 and a fully connected layer 13 (output layer). Feature representations are extracted from one or more layers of the DNN. The DNN 10 is designed and trained to identify speed limit signs 14. During the training, the conformity losses $L_{PC}$ of representations 151, 152 are computed at two different locations, namely before and after flattening the feature representations at the flattening layer 124. The conformity losses $L_{PC}$ are assigned to p-nom balls 161, 162. Hereafter, the losses are averaged together in the final loss $L_1(x,y)$ or $L_2(x,y)$.

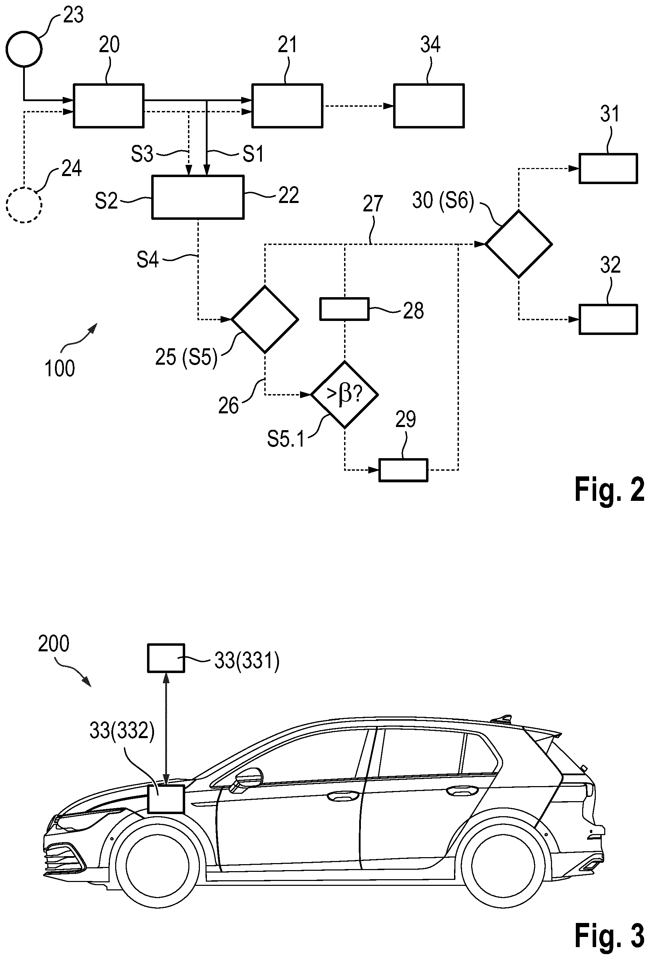

Fig. 2 shows a flowchart of the method 100. To carry out the method 100, the system has a feature extractor 20 (preferably a CNN), a detector 21 (FC layers) and an out-of-distribution detection module 22 (OOD detection module). In the normal case, the CNN 20 and the detector 21 carry out a prediction 34 which traffic sign 14 is identified. The question is, how reliable the prediction 34 is. Therefore, the method 100 carries out the following steps:

- Starting with a train dataset 23, the CNN 20 extracts train data features from a chosen layer (step S1). In other words, the activations of the latest CNN layer are extracted for the whole training dataset 23.

- The OOD detection module 22 is trained with the train data features extracted according step S1 (step S2).

- Starting with a test dataset 24, the CNN 20 extracts test data features from the same layer which was chosen in step S1 (step S3).

- Feeding into the DNN, which serves as an OOD detection module 22, to get results, which, dependent on the OOD detection method, could be either direct classification results or scores (step S4). A direct classification means that the OOD detection method verifies if the data sample is OOD or not OOD. Some OOD detection methods directly classify the input data as OOD/not-OOD without further post-processing. On the other hand, the other OOD detection methods, return scores as their main output. These scores represent for example, distances to the center of training data, or scores between 0 and 1.0 to represent how probable is that a certain data sample is OOD. In both of these cases, a threshold based on the training data is required. For example, the data samples that get scores below 0.75 are always inlier or vice versa. For such cases, a sub-figure is introduced in fig. 2 (26, 28,29, and S5.1) to tackle the cases where a threshold is defined. In such cases, the score of the new data point is compared to the defined threshold, and the according classification is then returned. If the score is above the threshold it is classified as OOD and vice versa.

- Check 25 if the output is score 26 or direct classification 27 (step S5).

- If the output is score 26, check if the score 26 is above or below a threshold (step 5.1). If the score 26 is greater than the threshold β, the score is an inlier 28. If the score 26 is less than the threshold β the score 26 is OOD 29.

- Finally, check 30 if the classification result is OOD and if the prediction is reliable 31 or not reliable 32 (step S6).

Fig. 3 shows a vehicle 200 with a system 33 designed to carry out the described method 100. In detail, the vehicle 200 is connected with a first subsystem 331 that is arranged in the backend to carry out the steps 1 and 2. Furthermore, a second subsystem 332 is installed in the vehicle 200 to carry out the steps 3 to 6.

**Reference Numbers**

| 100 | Method |
|---|---|
| 200 | Vehicle |
| 10 | Deep Neural Network (DNN) |
| 11 | Input Layer |
| 121 | Hidden Layer |
| 122 | Hidden Layer |
| 123 | Hidden Layer (Pooling Layer) |
| 124 | Hidden Layer (Flattening Layer) |
| 13 | Output Layer |
| 14 | Speed Limit Sign |
| 151 | Feature representation |
| 152 | Feature representation |
| 161 | p-norm-ball |
| 162 | p-norm-ball |
| 20 | Feature Extractor |
| 21 | Detector (FC Layer) |
| 22 | Out-Of-Distribution Detection Module |
| 23 | Train Dataset |
| 24 | Test Dataset |
| 25 | Check |
| 26 | Score |
| 27 | Classification |
| 28 | Inlier |
| 29 | Out-Of-Distribution |
| 30 | Check |
| 31 | Reliable |
| 32 | Not Reliable |
| 33 | System |
| 331 | 1st Subsystem |
| 332 | 2nd Subsystem |
| 34 | Prediction |
| S1... S6 | Step 1, Step 2, ... , Step 6 |
| $\beta$ | Threshold |

**Claims**

1. A method (100) to detect out-of-distribution data with a deep neuronal network (DNN) (10) with a loss function which groups similar classes in order to force the DNN to disentangle them from each other.

2. The method according to claim 1,
   wherein the loss function includes the term

$$WL_{PC}(\boldsymbol{x}, \boldsymbol{y}) = \sum_i \left\{ p - \frac{1}{k-1} \sum_{j \neq y_i} \begin{cases} \lambda * cp & j \in S^i \\ cp & j \notin S^i \end{cases} \right\},$$

wherein λ>1 and $S^i$ being the set of all similar classes,
or the term

$$L_{MSPC}(\boldsymbol{x}, \boldsymbol{y}) = \sum_i \left\{ p^c + p^g - \frac{1}{k-1} \sum_{j \neq y_i} \left( cp^c(i,j) - cp^g(i,j) \right) \right\},$$

wherein g represents groups and $p^g$ represents group levels.

3. The method according to any previous claim,

> wherein the loss function
> is a first loss fuction L1 (x,y) or a second loss function L2(x,y),
> wherein $L_1(x,y) = L_{CE}(x,y) + WL_{PC}(x,y)$, and

$$L_2(x,y) = L_{CE}(x,y) + L_{MSPC}(x,y).$$

4. The method according to claim 3, wherein the cross entropy loss function $L_{CE}(x,y)$ is

$$\mathcal{L}_{CE}(\boldsymbol{x}, \boldsymbol{y}) = \sum_{i=1}^{r} - \log \frac{\exp(\boldsymbol{w}_{y_i}^T \boldsymbol{f}_i + \boldsymbol{b}_{y_i})}{\sum_{j=1}^{k} \exp(\boldsymbol{w}_j^T \boldsymbol{f}_i + \boldsymbol{b}_j)}.$$

5. The method (100) according to one of the claims 1 to 5, **characterized by** the DNN (10) with an input layer (11) and/or N-hidden layers (121, 122, 123, 124) and/or a pooling layer (123) and/or a final flattening layer (124) and/or a fully connected layer (13) (output layer).

6. The method according to one of the preceding claims, wherein the DNN (10) is designed and trained to identify speed limit signs (14).

7. The method according to one of the preceding claims, **characterized in that** during the training of the DNN (10), conformity losses $L_{PC}$ of feature representations (151, 152) are computed at two different locations, preferably before and after flattening the embedded representations at the flattening layer (124), wherein the conformity losses $L_{PC}$ are assigned to p-nom balls (161, 162) and the losses are averaged together in the final loss $L_1(x,y)$ or $L_2(x,y)$.

8. The method according to one of the claims 6 or 7, **characterized by** starting with a train dataset (23), wherein a feature extractor (20) of the DNN extracts (S1) train data features from a chosen layer.

9. The method according to claim 8, **characterized in that** DNN is trained (S2) with the extracted train data features.

10. The method according to claim 8 or 9, **characterized by** starting with a test dataset (24), the feature extractor (20) extracts (S3) test data features from the chosen same layer .

11. The method according to claim 10, **characterized in that** as an output of the DNN which depend on the OOD detection method, either direct classification results or scores are obtained (S4).

12. The method according to claim 11, **characterized by** checking (25) if the output is a score (26) or a direct classification result (27) (S5).

13. The method according to the claims 6 to 12, wherein the steps according claims 8 and 9 are carried out on a first subsystem (331) in the backend and the steps according claims 9 to 12 are carried out in a second subsystem (332) installed on a vehicle (200).

14. A vehicle (200) with a system designed to carry out the method (100) according to one of the previous claims.

15. A vehicle (200) according to claim 14, wherein the vehicle (200) is connected with a first subsystem (331) that is arranged in the backend and with a second subsystem (332) that is installed in the vehicle (200).

Fig. 1

S3    S1

S2

S4

100

25 (S5)

26

S5.1

>β?

27

28

29

30 (S6)

31

32

**Fig. 2**

200

33(331)

33(332)

**Fig. 3**

Europäisches
Patentamt

European
Patent Office

Office européen
des brevets

# EUROPEAN SEARCH REPORT

**Application Number**

EP 23 19 1528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | I. FOSTIROPOULOS ET AL.: "Supervised Contrastive Prototype Learning: Augmentation Free Robust Neural Network", ARXIV.ORG, CORNELL UNIVERSITY LIBRARY, 201 OLIN LIBRARY CORNELL UNIVERSITY ITHACA, NY 14853, 26 November 2022 (2022-11-26), XP091379153, * sections 1 to 4 * | 1-15 | INV. G06N3/094 G06N3/09 G06N3/045 |
| X,D | A. MUSTAFA ET AL.: "Deeply Supervised Discriminative Learning for Adversarial Defense", IEEE TRANSACTIONS ON PATTERN ANALYSIS AND MACHINE INTELLIGENCE, vol. 43, no. 9, 5 March 2020 (2020-03-05), pages 3154-3166, XP011868804, ISSN: 0162-8828, DOI: 10.1109/TPAMI.2020.2978474 [retrieved on 2021-08-03] * sections 2 and 3 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 7 February 2024 | Millet, Guillaume |

EPO FORM 1503 03.82 (P04C01)

## REFERENCES CITED IN THE DESCRIPTION

**Patent documents cited in the description**

- US 20220391742 A1
- US 20200226430 A1
- US 20220348211 A1
- US 20220111874 A1
- US 20220343171 A1

**Non-patent literature cited in the description**

- **GAL, Y** ; **GHAHRAMANI, Z.** Dropout as a Bayesian Approximation: Representing Model Uncertainty in Deep Learning. *International Conference on Machine Learning, PMLR*, 2016, vol. 48, 1050-1059
- **OVADIA, Y.** Can You Trust Your Model's Uncertainty? Evaluating Predictive Uncertainty Under Dataset Shift. *33rd Conference on Neural Information Processing Systems (NeurIPS)*, 2019
- **QIO, X.** Quantifying Point-prediction Uncertainty In Neural Networks Via Residual Estimation With An I/o Kernel. *ArXiv*, 2020
- **AAMIR MUSTAFA** ; **SALMAN H. KHAN** ; **MUNAWAR HAYAT** ; **ROLAND GOECKE** ; **JIANBING SHEN** ; **LING SHAO**. Deeply supervised discriminative learning for adversarial defense.. *IEEE Transactions on Pattern Analysis and Machine Intelligence*, 2021, vol. 43 (9), 3154-3166